# EUROPÄISCHE PATENTANMELDUNG

(11) **EP 1 208 939 A1**
(43) Veröffentlichungstag der Anmeldung: **29.05.2002**
(21) Anmeldenummer: 00125545.4
(22) Anmeldetag: 22.11.2000
(51) Int. Cl.: B23Q 7/14, B23Q 41/02

(54) **Einrichtung zum automatischen Transport von Gütern**

(71) Anmelder: VA TECH Transport- und Montagesysteme Deutchland GmbH, 86368 Gersthofen (DE)
(72) Erfinder: Schupp, Gerhard, 86316 Friedberg 2 (DE); Brüstle, Erich, 72644 Oberboihingen (DE)
(74) Vertreter: VA TECH Patente GmbH & Co

(57) **Zusammenfassung**

Fahrzeuge einer Transporteinrichtung sind im Allgemeinen mit eigenem Antrieb zum Heben und Senken der zu transportierenden Gütern ausgestattet. Dies macht solche Fahrzeuge schwer und teuer. Dieses Problem wird bei der vorliegenden Erfindung dadurch gelöst, dass die Einrichtung zum Heben und Senken im Wesentlichen stationär in der Arbeitsstation angeordnet ist.

## Beschreibung

Die vorliegende Erfindung offenbart eine Einrichtung zum automatischen Transport von Gütern verschiedener Art in, aus und zwischen Arbeitsstationen, beispielsweise Schweißstationen, bestehend aus zumindest einem entlang von Führungseinrichtungen, beispielsweise Schienen, bewegbaren Fahrzeug und einer heb- und senkbaren Aufnahmeeinheit für Güter.

Transportsysteme, mit denen Güter zwischen Arbeitsstationen transportiert und in der Arbeitsstation abgesenkt und/oder gehoben werden sollen, sind in einer Vielzahl bekannt. Die meisten dieser Transportsysteme besitzen mehrere Fahrzeuge zum Bewegen der Transportgüter zwischen den Arbeitsstationen, und jedes Fahrzeug weist einen festen und einen heb- und senkbaren beweglichen Teil zum Bewegen in den Arbeitsstationen auf. Zum Heben und Senken hat jedes dieser Fahrzeuge des Transportsystems einen entsprechenden Antrieb einschließlich der zugehörigen Steuerung integriert. Diese integrierten Antriebe erhöhen die Kosten eines solchen Fahrzeuges beträchtlich, was sich für das gesamte Transportsystem mit vielen Fahrzeugen ganz besonders stark bemerkbar macht. Außerdem wird dadurch natürlich das zu bewegende und zu haltende bzw. zu tragende Gewicht erhöht, wodurch die Fahrzeuge stabiler gebaut werden müssen und der Antrieb des Fahrzeuges größer dimensioniert werden muss. Auch das schlägt sich direkt auf die Kosten nieder.

Die vorliegende Erfindung stellt sich deshalb die Aufgabe, eine Einrichtung zum Transport von Gütern so zu verbessern, dass deren Fahrzeuge leichter und demnach kostengünstiger gebaut werden können und dennoch alle gewünschten Funktionen, wie Transportieren, Heben und Senken von Lasten, durchgeführt werden können.

Die Aufgabe ist erfindungsgemäß dadurch gelöst, dass in der Arbeitsstation zumindest eine stationäre Heb- bzw. Senkeinrichtung zum Heben und/oder Senken der Aufnahmeeinheit vorgesehen ist. Dadurch kann auf eine Heb- und Senkeinrichtung am Fahrzeug verzichtet werden, was die Konstruktion des Fahrzeuges vereinfacht, das Eigengewicht des Fahrzeuges erheblich verringert und als direkte Folge die Kosten eines Fahrzeuges bedeutend reduziert, ohne auf eine Funktionalität verzichten zu müssen. Dieser Kostenvorteil kommt ganz besonders stark bei großen Produktionsstrassen mit oftmals mehreren hundert Fahrzeugen zum Tragen.

Als besonders vorteilhaft erweist es sich, wenn als Heb- bzw. Senkeinrichtung zumindest ein stationärer Antrieb in der Arbeitsstation vorgesehen ist und der Antrieb und das Fahrzeug über eine Kupplungsvorrichtung miteinander verbindbar sind. Der Antrieb und die Kupplungsvorrichtung kann dabei an einer beliebigen Stelle angebracht sein, was die konstruktive Flexibilität der Arbeitsstation erhöht.
In einer weiteren vorteilhaften Ausführungsform ist das Fahrzeug starr mit einem fixen Teil der Aufnahmeeinheit verbunden. An der Aufnahmeeinheit ist weiters ein heb- und senkbarer Teil vorgesehen und am fixen Teil der Aufnahmeeinheit sind Führungen vorgesehen, in denen der heb- und senkbare Teil der Aufnahmeeinheit führbar ist. Diese Ausführungsvariante ist flexibel sowie einfach und kostengünstig umzusetzen.
Eine einfache Kupplungsvorrichtung ergibt sich, wenn am beweglichen Teil der Aufnahmeeinheit zumindest ein erster Teil einer Kupplungsvorrichtung angebracht ist, am Antrieb ein zweiter zugehöriger Teil der Kupplungsvorrichtung angebracht ist, oder umgekehrt und der bewegliche Teil der Aufnahmeeinheit und der Antrieb in der Arbeitsstation mittels der beiden Kupplungsteile miteinander verbindbar sind.
Eine sehr einfache Ausführungsform einer Kupplungsvorrichtung erhält man durch eine Führungsschiene mit Führungsrolle.

Eine weitere sehr günstige Ausführungsform für die Heb- bzw. Senkeinrichtung in der Arbeitsstation ist eine durchgehende Führungsvorrichtung, die entsprechend einer gewünschten Steuerkurve geformt ist und das Fahrzeug beim Ein-, Aus- oder Durchfahren der Arbeitsstation gemäß der Steuerkurve heb- und/oder senkbar ist. Dabei ist es alternativ möglich die zumindest eine Führungsvorrichtung, beispielsweise eine Führungsschiene, am beweglichen Teil der Aufnahmeeinheit und das zumindest eine Führungselement, beispielsweise eine Führungsrolle, stationär in der Arbeitsstation vorzusehen ist, oder umgekehrt.
Bei dieser Ausführungsform, kann der Antrieb komplett eingespart werden und die notwendige Hub- bzw. Senkbewegung wird durch die Längsbewegung des Fahrzeuges in der Arbeitsstation erzeugt. Dadurch können nochmals Kosten einspart werden.

Als vorteilhafter Antrieb zum Heben und Senken ist ein Kurbeltrieb vorgesehen. Alternativ dazu kann der Antrieb zum Heben und Senken auch ein hydraulischer, pneumatischer, elektromagnetischer oder mechanischer Linearantrieb sein. Der Antrieb ist dadurch besonderen Gegebenheiten und Anforderungen sehr einfach anzupassen.

Der Betrieb des Antriebes ist sehr vorteilhaft, wenn der Antrieb so ansteuerbar ist, dass damit schnelle Hub- oder Senkbewegungen und sanfte Anläufe und Bremswege durchführbar sind, sowie Auf- und Absetzpositionen genau anfahrbar sind. Zur maximalen Flexibilität ist der Antrieb automatisch und/oder manuell ansteuerbar.

Eine sehr günstige Position für den Antrieb in der Arbeitsstation ist am Boden stehend, oder als möglich Alternative auch in der Arbeitsstation hängend.

Konstruktiv sehr einfache und günstige Ausführungsformen ergeben sich, wenn der heb- und senkbare Teil der Aufnahmeeinheit einschließlich der zu transportierenden Güter außerhalb der Arbeitsstation durch ein Gegengewicht haltbar ist, oder alternativ, wenn der heb- und senkbare Teil der Aufnahmeeinheit einschließlich der zu transportierenden Güter außerhalb der Arbeitsstation durch eine Verriegelungsmechanik, beispielsweise ein Bolzen in einer Bohrung, haltbar ist.
Innerhalb der Arbeitsstation ist es sehr vorteilhaft, wenn der heb- und senkbare Teil der Aufnahmeeinheit einschließlich der zu transportierenden Güter im eingekuppelten Zustand durch den Antrieb bzw. durch die Führungsvorrichtung haltbar ist.

Die Genauigkeit der Hebe- bzw. Senkbewegung kann verbessert werden, wenn in der Arbeitsstation zumindest eine Zentriervorrichtung vorgesehen ist, mittels der der abgesenkte bewegliche Teil der Aufnahmeeinheit in der Arbeitsstation in der Ebene genau zentrierbar ist und in der Arbeitsstation zumindest eine Referenzauflage vorgesehen ist, mittels der der abgesenkte bewegliche Teil der Aufnahmeeinheit in der Arbeitsstation in der Höhe genau einstellbar ist.

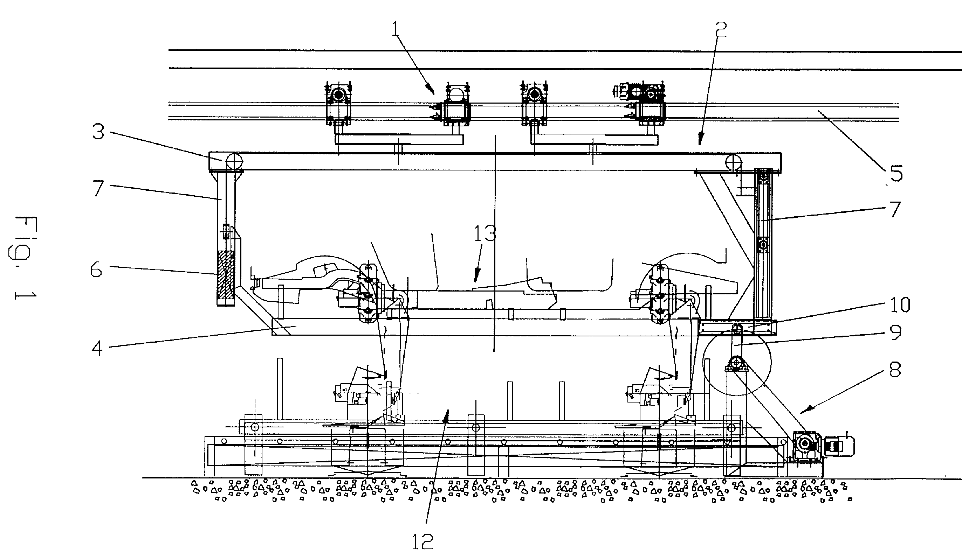

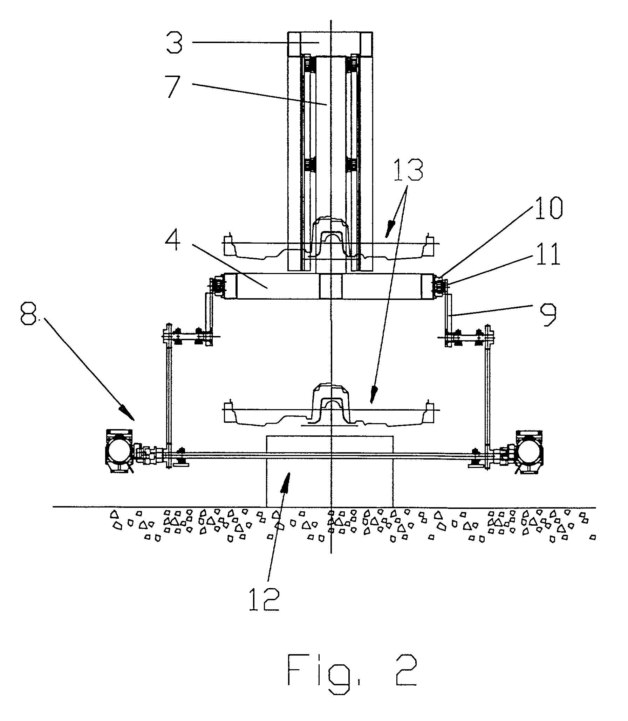

Die vorliegende Erfindung wird anhand der folgenden beispielhaften und nicht einschränkenden Figuren 1 und 2 beschrieben. Dabei zeigt
Fig. 1 eine Ansicht quer zur Fahrtrichtung des Fahrzeuges 1 und
Fig. 2 eine Ansicht in Fahrtrichtung des Fahrzeuges 1.

Bei dem im folgenden beschriebenen Ausführungsbeispiel der Erfindung hängt das Fahrzeug 1 frei an nur schematisch dargestellten Führungseinrichtungen 5, wie beispielsweise Schienen. Das Fahrzeug 1 kann dabei selbst angetrieben sein, oder es kann auch durch einen externen Antrieb bewegt werden, insbesondere eine geschleppte Ausführungsvariante. Der Antrieb des Fahrzeuges 1 ist hier nicht näher dargestellt. Das Fahrzeug 1 ist starr mit einem festen Teil 3 der Aufnahmeeinheit 2 verbunden. An diesem festen Teil 3 sind zu beiden Seiten vertikale Führungen 7 angebracht, entlang denen ein beweglicher Teil 4 der Aufnahmeeinheit 2 in vertikaler Richtung bewegbar geführt ist. Der bewegliche Teil 4 und die Führungen 7 sind dabei so ausgeführt, dass damit eine präzise Führung des beweglichen Teils 4 der Aufnahmeeinheit 2 möglich ist. Auf dem beweglichen Teil 4 befindet sich das in den Fig. 1 und 2 nur schematisch dargestellte, zu transportierende Gut 13, welches mit dem Fahrzeug 1 zwischen Arbeitstationen 12 transportiert werden soll, bzw. in einer Arbeitsstation 12 mittels einer Heb- und Senkeinrichtung gehoben oder abgesenkt werden soll. Zum Heben und Senken des Gutes 13 befindet sich am beweglichen Teil 4 der Aufnahmeeinheit 2 eine Kupplungsvorrichtung, hier eine Führungsschiene 10, mittels der der bewegliche Teil 4 mit dem am Boden der Arbeitsstation 12 befestigten, stationären Antrieb 8 verbunden wird. Der Antrieb 8 besteht in diesem Beispiel aus einem über einen Zahnriemen angetriebenen Kurbeltrieb 9, der mit einer Führungsrolle 11 in die Führungsschiene 10 einfährt und somit eine Verbindung zwischen Antrieb 8 und Aufnahmeeinheit 2 herstellt. Der mit diesem Antrieb 8 erreichbare Hub ist nur von der Dimensionierung des Kurbeltriebes 9 abhängig. Zur Hub- oder Senkbewegung in der Arbeitsstation 12 wird das Fahrzeug 1 angehalten und der Antrieb 8 aktiviert, wobei die Führungen 7 der Aufnahmeeinheit 2 für eine möglichst präzise Absenkung oder Anhebung des Gutes 13 sorgen.
Es ist natürlich auch im Rahmen der Erfindung möglich den Antrieb 8 an einer beliebigen anderen Stelle in der Arbeitsstation 12 anzubringen, insbesondere kann der Antrieb 8 auch aufgehängt sein. Weiters ist natürlich auch im Rahmen der Erfindung möglich, dass sich das Fahrzeug 1 während der Hub- oder Senkbewegung bewegt, um unnötige Anfahrten und Stops, die die Verweilzeiten des Fahrzeuges 1 in der Arbeitsstation 12 verlängern würden, zu vermeiden. Dazu kann zum Beispiel vorgesehen sein, dass sich der Antrieb 8 in der Arbeitsstation 12 ein Stück mit dem Fahrzeug 1 mitbewegt.
Ebenfalls ist es denkbar einen anderen Antrieb 8, wie zum Beispiel einen hydraulischen, pneumatischen oder einen anderen mechanischen Antrieb 8, zu verwenden. Dabei ist es selbstverständlich auch möglich die Kupplungsvorrichtung anders zu gestalten und den besonderen Anforderungen eines jeden Antriebes 8 anzupassen.

Der Antrieb 8 ist so ausgeführt, dass er sanfte Anfahrten bzw. Bremswege und rasche Heb- und Senkbewegungen zulässt. Darüber hinaus können im Bereich des Hubes beliebige Positionen genau angefahren werden. Der Antrieb 8 kann sowohl manuell als auch automatisch angesteuert werden.
Außerdem ist der Antrieb 8 in der Lage, das Gewicht des beweglichen Teils 4 der Aufnahmeeinheit 2 einschließlich des Gewichtes des Gutes 13 in der Arbeitsstation 12 im eingekuppelten Zustand zu halten.

Um den beweglichen Teil 4 der Aufnahmeeinheit 2 außerhalb der Arbeitstationen 12 in seiner oberen Endlage zu halten und damit ein automatisches sicheres Einkuppeln in der Arbeitsstation 12 zu gewährleisten, ist ein Gegengewicht 6 vorgesehen. Dieses wird vorteilhaft in einer der vertikalen Führungen 7 geführt. Es sind natürlich auch alle anderen Möglichkeiten der Fixierung des beweglichen Teils 4 der Aufnahmeeinheit 2 außerhalb der Arbeitsstation 12 denkbar, wie zum Beispiel eine beliebige Verriegelungsmechanik.

Es ist weiters auch denkbar auf einen eigenen Antrieb in einer Arbeitsstation 12 ganz zu verzichten und die vertikale Hub- bzw. Senkbewegung durch die nach einer speziellen Steuerkurve geformten durchgehenden Führungsschiene 10 zu erzielen. Das Fahrzeug wird hierbei durch die Arbeitsstation 12 durchbewegt, wodurch sich der bewegliche Teil 4 der Aufnahmeeinheit 2 gemäß der Führungsschiene 10 auf und ab bewegt. Die Führungsschiene 10 kann dabei an der Aufnahmeeinheit 2 oder stationär in der Arbeitsstation 12 und die zugehörige Führungsrolle 11, oder ein beliebiges anderes Führungselement, entsprechend stationär in der Arbeitsstation 12 oder an der Aufnahmeeinheit 2 angebracht sein.

## Patentansprüche

1. Einrichtung zum automatischen Transport von Gütern verschiedener Art in, aus und zwischen Arbeitsstationen (12), beispielsweise Schweißstationen, bestehend aus zumindest einem entlang von Führungseinrichtungen (5), beispielsweise Schienen, bewegbaren Fahrzeug (1) und einer heb- und senkbaren Aufnahmeeinheit (2) für Güter (13), **dadurch gekennzeichnet, dass** zumindest eine stationäre Heb- bzw. Senkeinrichtung zum Heben und/oder Senken der Aufnahmeeinheit (2) in der Arbeitsstation (12) vorgesehen ist.

2. Einrichtung nach Anspruch 1, **dadurch gekennzeichnet, dass** als Heb- bzw. Senkeinrichtung zumindest ein stationärer Antrieb (8) in der Arbeitsstation (12) vorgesehen ist und der Antrieb (8) und das Fahrzeug (1) über eine Kupplungsvorrichtung miteinander verbindbar sind.

3. Einrichtung nach Anspruch 1, **dadurch gekennzeichnet, dass** als Heb- bzw. Senkeinrichtung in der Arbeitsstation (12) zumindest eine durchgehende Führungsvorrichtung vorgesehen ist, die entsprechend einer gewünschten Steuerkurve geformt ist **und dass** das Fahrzeug (1) beim Ein-, Aus- oder Durchfahren der Arbeitsstation (12) gemäß der Steuerkurve heb- und/oder senkbar ist.

4. Einrichtung nach Anspruch 2 oder 3, **dadurch gekennzeichnet, dass** das Fahrzeug (1) starr mit einem fixen Teil (3) der Aufnahmeeinheit (2) verbunden ist **und dass** an der Aufnahmeeinheit (2) ein heb- und senkbar beweglicher Teil (4) der Aufnahmeeinheit (2) vorgesehen ist.

5. Einrichtung nach Anspruch 4, **dadurch gekennzeichnet, dass** am fixen Teil (3) der Aufnahmeeinheit (2) Führungen (7) vorgesehen sind, in denen der bewegliche Teil (4) der Aufnahmeeinheit (2) führbar ist.

6. Einrichtung nach Anspruch 5, **dadurch gekennzeichnet, dass** am beweglichen Teil (4) der Aufnahmeeinheit (2) zumindest ein erster Teil der Kupplungsvorrichtung angebracht ist, **dass** am Antrieb (8) ein zweiter zugehöriger Teil der Kupplungsvorrichtung angebracht ist, oder umgekehrt **und dass** der bewegliche Teil (4) der Aufnahmeeinheit (2) und der Antrieb (8) in der Arbeitsstation (12) mittels der beiden Kupplungsteile miteinander verbindbar sind.

7. Einrichtung nach Anspruch 6, **dadurch gekennzeichnet, dass** die Kupplungsvorrichtung als Führungsschiene (10) mit zugehöriger Führungsrolle (11) ausgeführt ist.

8. Einrichtung nach Anspruch 6 oder 7, **dadurch gekennzeichnet, dass** als Antrieb (8) zum Heben und Senken ein hydraulischer, pneumatischer, elektromagnetischer oder mechanischer Antrieb vorgesehen ist, insbesondere ein Linearantrieb.

9. Einrichtung nach Anspruch 6 oder 7, **dadurch gekennzeichnet, dass** als Antrieb (8) zum Heben und Senken ein Kurbeltrieb vorgesehen ist.

10. Einrichtung nach Anspruch 8 oder 9, **dadurch gekennzeichnet, dass** der Antrieb (8) so ansteuerbar ist, dass damit sanfte Anläufe und Bremswege durchführbar sind.

11. Einrichtung nach einem der Ansprüche 8 bis 10, **dadurch gekennzeichnet, dass** der Antrieb (8) so ansteuerbar ist, dass damit Auf- und Absetzpositionen genau anfahrbar sind.

12. Einrichtung nach einem der Ansprüche 8 bis 11, **dadurch gekennzeichnet, dass** der Antrieb (8) automatisch und/oder manuell ansteuerbar ist.

13. Einrichtung nach einem der Ansprüche 5 bis 12, **dadurch gekennzeichnet, dass** der Antrieb (8) in der Arbeitsstation (12) am Boden stehend oder in der Arbeitsstation (12) hängend angebracht ist.

14. Einrichtung nach Anspruch 4, **dadurch gekennzeichnet, dass** die zumindest eine Führungsvorrichtung, beispielsweise eine Führungsschiene (10), am beweglichen Teil (4) der Aufnahmeeinheit (2) und das zumindest eine Führungselement, beispielsweise eine Führungsrolle (11), stationär in der Arbeitsstation (12) vorgesehen ist, oder umgekehrt.

15. Einrichtung nach einem der Ansprüche 4 bis 14, **dadurch gekennzeichnet, dass** der bewegliche Teil (4) der Aufnahmeeinheit (2) einschließlich der zu transportierenden Güter (13) außerhalb der Arbeitsstation (12) durch ein Gegengewicht (6) haltbar ist.

16. Einrichtung nach einem der Ansprüche 4 bis 14, **dadurch gekennzeichnet, dass** der bewegliche Teil (4) der Aufnahmeeinheit (2) einschließlich der zu transportierenden Güter (13) außerhalb der Arbeitsstation (12) durch eine Verriegelungsmechanik, beispielsweise ein Bolzen in einer Bohrung, haltbar ist.

17. Einrichtung nach Anspruch 15 oder 16, **dadurch gekennzeichnet, dass** der bewegliche Teil (4) der Aufnahmeeinheit (2) einschließlich der zu transportierenden Güter (13) innerhalb der Arbeitsstation (12) im eingekuppelten Zustand durch den Antrieb (8) bzw. durch die Führungsvorrichtung haltbar ist.

18. Einrichtung nach einem der Ansprüche 4 bis 17, **dadurch gekennzeichnet, dass** in der Arbeitsstation (12) zumindest eine Zentriervorrichtung vorgesehen ist, mittels der der bewegliche Teil (4) der Aufnahmeeinheit (2) in der Arbeitsstation (12) in der Horizontalebene genau zentrierbar ist.

19. Einrichtung nach einem der Ansprüche 4 bis 18, **dadurch gekennzeichnet, dass** in der Arbeitsstation (12) zumindest eine Referenzauflage vorgesehen ist, mittels der der bewegliche Teil (4) der Aufnahmeeinheit (2) in der Arbeitsstation (12) in der Höhe genau einstellbar ist.
